# EUROPÄISCHE PATENTSCHRIFT

(11) **EP 3 414 474 B1**
(45) Veröffentlichungstag und Bekanntmachung des Hinweises auf die Patenterteilung: **02.06.2021**
(21) Anmeldenummer: 16812941.9
(22) Anmeldetag: 15.12.2016
(51) Int. Cl.: F16H 63/18, F16H 63/34, F16H 63/38

(54) **VORRICHTUNG UND VERFAHREN ZUM ARRETIEREN EINER SCHALTWALZE EINES SEQUENTIELLEN GETRIEBES**
DEVICE AND METHOD FOR ARRESTING A CONTROLLER CYLINDER OF A SEQUENTIAL TRANSMISSION
DISPOSITIF ET PROCÉDÉ DE BLOCAGE D'UN TAMBOUR DE SÉLECTION D'UNE BOÎTE DE VITESSES SÉQUENTIELLE

(30) Priorität: 08.02.2016 DE 102016201860
(43) Veröffentlichungstag der Anmeldung: 19.12.2018
(73) Patentinhaber: Bayerische Motoren Werke Aktiengesellschaft, 80809 München (DE)
(72) Erfinder: MAIER, Bernd, 85737 Ismaning (DE)
(86) Internationale Anmeldenummer: PCT/EP2016/081242
(87) Internationale Veröffentlichungsnummer: WO 2017/137123

(56) Entgegenhaltungen:
- JP-A- 2006 090 405
- US-A1- 2008 229 854
- US-A1- 2011 296 934
- US-B1- 6 487 927

## Beschreibung

Die Erfindung betrifft eine Vorrichtung und ein Verfahren zum Arretieren einer Schaltwalze eines sequentiellen Getriebes.

Sequentielle Getriebe, die sich nicht wahlfrei, sondern nur sequentiell ohne Überspringen eines Gangs schalten lassen, werden insbesondere bei Motorrädern und anderen motorisierten Zweirädern, Trikes und Quads eingesetzt.

Das Schalten eines sequentiellen Getriebes kann durch einen Schaltassistenten erleichtert werden, der das Trennen von Kurbelwelle und Getriebeeingang durch eine Kupplung für einen Schaltvorgang entbehrlich macht. Es sind Schaltassistenten bekannt, die das Hochschalten und Herunterschalten der Gänge auf diese Weise unterstützen. Mit einem solchen Schaltassistenten werden in den meisten Schaltszenarien komfortable Gangwechsel ermöglicht. Bei geringer Last auf dem Antriebsstrang kann jedoch der Gangwechsel stattfinden, ohne dass der Sensor des Schaltassistenten ausgelöst wird, der einen anstehenden Gangwechsel erkennen und anzeigen soll. In diesem Fall findet kein Eingriff durch die Motorsteuerung statt, und der Schaltvorgang findet ohne hinreichende Drehzahlsynchronisierung statt.

Die US 6 487 927 B1 zeigt eine Vorrichtung und beschreibt ein Verfahren zum Arretieren einer Schaltwalze eines sequentiellen Motorradgetriebes, die mehrere stabile Stellungen hat. Das Motorradgetriebe hat eine Neutralstellung, in der der das Drehmoment des Motors nicht auf die Abtriebswelle des Getriebes übertragen wird. Auf der Schaltwalze befinden sich Rasten an Positionen, die den Einrastpositionen jedes Gangs und des Leerlaufs entsprechen. Ein vorgespannter Stößel wird in die entsprechende Raste gedrückt, um die Schaltwalze gegen eine weitere Drehbewegung zu sichern, nachdem der Schalthebel in seine Mittelstellung zurückgekehrt ist. Während eines Schaltvorgangs wird auf die Schaltwelle eine ausreichende Drehkraft aufgebracht, um die Schaltwalze aus der stabilen Position zu drehen, wobei der vorgespannte Stößel aus seiner Raste zurückgezogen wird.

Die US 2008/229854 A1 zeigt ein Getriebe eines Quads (All Terrain Vehicle). Hier sind auf der Schaltwalze des Getriebes neben den stabilen Positionen, die den verschiedenen Gängen entsprechen, mehrere weitere stabile Positionen vorgesehen, die mehreren Neutralstellungen entsprechen. Ein Einrückhebel mit einer Rastrolle kann selektiv mit entsprechenden Aussparungen in der Schaltwalze in Eingriff gebracht werden. Hierzu ist eine den Einrückhebel vorspannende Torsionsfeder vorgesehen.

Aufgabe der Erfindung ist es, bei einem sequentiellen Getriebe in möglichst allen Betriebsbereichen einen reproduzierbar komfortablen Gangwechsel zu ermöglichen.

Gelöst wird diese Aufgabe durch eine Vorrichtung mit den Merkmalen des Anspruchs 1 sowie durch ein Verfahren mit den Merkmalen des Anspruchs 9. Vorteilhafte und zweckmäßige Ausgestaltungen der erfindungsgemäßen Vorrichtung und des erfindungsgemäßen Verfahrens sind in den zugehörigen Unteransprüchen angegeben.

Die erfindungsgemäße Vorrichtung zum Arretieren einer Schaltwalze eines sequentiellen Getriebes umfasst eine Schaltwalze, die mehrere stabile Positionen hat, wobei jede stabile Position einem Gang entspricht, und eine Schaltachse zum Drehen der Schaltwalze um einen bestimmten Drehwinkel zur Durchführung eines Gangwechsels. Gemäß der Erfindung ist zusätzlich zur Schaltachse ein Aktuator vorgesehen, der bei jedem Gangwechsel mittels einer Steuereinrichtung in einen aktivierten Zustand überführbar ist, in dem der Aktuator direkt oder indirekt so an der Schaltwalze angreift, dass bei einem Drehen der Schaltwalze aus einer stabilen Position, die einem zuvor eingelegten Gang entspricht, die Schaltwalze in einer instabilen Zwischenposition zwischen der stabilen Position und der nächsten stabilen Position, die dem nächsten Gang entspricht, gehalten wird und so ein Weiterdrehen der Schaltwalze verhindert wird.

Dank der Erfindung ist es möglich, einen weitgehend lastfreien Gangwechsel sicherzustellen, bei dem die Drehzahlen der beteiligten Zahnräder des Getriebes aufeinander abgestimmt sind. Die Arretierung der Schaltwalze in der Zwischenposition erlaubt es, in dieser Phase bei herausgenommenem Gang die Drehzahlen anzugleichen, bevor dann der nächste Gang eingelegt wird. Der Gangwechsel wird somit weitgehend geräuschlos durchgeführt und für den Fahrer als angenehm empfunden. Zudem wird das Getriebe geschont.

Des Weiteren wird durch die erfindungsgemäße Schaltwalzenarretierung die Unterstützung einer Schubhochschaltung ermöglicht, da bei dieser der Gradient der Drehzahlangleichung durch die Reibleistung des Motors eingeschränkt ist.

Um die Schaltwalze mit der erfindungsgemäßen Arretiervorrichtung vorübergehend in der Zwischenposition zu halten, gibt es mehrere Möglichkeiten. Gemäß einer ersten Alternative greift der Aktuator der Arretiervorrichtung im aktivierten Zustand in eine außenseitige Ausnehmung der Schaltwalze ein. So kann ein geeignetes Stellelement gezielt in die Ausnehmung eingesteuert werden, um ein Weiterdrehen der Schaltwalze zu verhindern. Wird das Stellelement wieder eingefahren, kann sich die Schaltwalze zur Vollendung des Gangwechsels weiterdrehen.

Gemäß der ersten Ausführungsform kann die Schaltwalze mehrere in Umfangsrichtung verteilte Ausnehmungen aufweisen. Der Aktuator und die Ausnehmungen sind dann, insbesondere hinsichtlich ihrer Form und Anordnung, so aufeinander abgestimmt, dass der Aktuator im aktivierten Zustand an wenigstens einem Rand einer Ausnehmung angreift, sodass die Schaltwalze dadurch in besagter Zwischenposition festgehalten wird.

Als Stellelement des Aktuators eignet sich für die erste Ausführungsform insbesondere ein ausfahrbarer Stift.

Gemäß einer zweiten Ausführungsform der erfindungsgemäßen Arretiervorrichtung lenkt der Aktuator im aktivierten Zustand eine Stange aus, die an einen Rastierhebel des Getriebes gekoppelt ist. Bei dieser Ausführungsform greift der Aktuator also nicht direkt an der Schaltwalze, sondern an einem besser zugänglichen Rastierhebel des Getriebes an.

So kann die im aktivierten Zustand des Aktuators ausgelenkte Stange eine Rastrolle des Rastierhebels gegen einen Zacken des bei sequentiellen Getrieben üblichen Raststerns oder einer ähnlichen Vorrichtung drücken, der drehfest an die Schaltwalze gekoppelt ist.

Als Antrieb für den Aktuator eignet sich insbesondere ein Magnetantrieb, der in der Regel sehr reaktionsschnell ist. Dies ist für einen zuverlässigen Betrieb von Bedeutung, da die Schaltwalze bei jedem unterstützten Schaltvorgang immer im richtigen Moment in der richtigen Stellung festgehalten werden muss.

Gemäß der bevorzugten Anwendung der Erfindung ist die Steuereinrichtung der Arretiervorrichtung Teil einer Steuerung eines Schaltassistenten. Dessen Steuerung kann wiederum Teil der Motorsteuerung bzw. mit dieser verknüpft sein. Dadurch ist sichergestellt, dass die Ansteuerung des Aktuators bestmöglich auf die Drehzahlen der Antriebs- und Abtriebswelle des Getriebes abgestimmt werden kann.

Die Erfindung schafft auch ein Verfahren zum Arretieren einer Schaltwalze eines sequentiellen Getriebes mithilfe einer Vorrichtung der oben beschriebenen Art. Das erfindungsgemäße Verfahren umfasst folgende Schritte: Drehen der Schaltwalze des Getriebes aus einer stabilen Position, die einem zuvor eingelegten Gang entspricht, in eine instabile Zwischenposition vor der nächsten stabilen Position, die dem nächsten Gang entspricht, und Arretieren der Schaltwalze in der instabilen Zwischenposition durch Aktivieren des Aktuators.

Bezüglich der Vorteile des erfindungsgemäßen Verfahrens wird auf die obigen Ausführungen zur erfindungsgemäßen Arretiervorrichtung verwiesen.

Nach dem erfindungsgemäßen Verfahren soll der Aktuator deaktiviert werden, wenn die Drehzahl der Antriebswelle mit der Drehzahl der Abtriebswelle des Getriebes übereinstimmt.

Weitere Merkmale und Vorteile der Erfindung ergeben sich aus der nachfolgenden Beschreibung und aus den beigefügten Zeichnungen, auf die Bezug genommen wird. In den Zeichnungen zeigen:
- Figur 1 eine perspektivische Ansicht eines sequentiellen Getriebes mit einer schematischen Darstellung einer ersten Ausführungsform einer erfindungsgemäßen Vorrichtung zum Arretieren der Schaltwalze des Getriebes;
- Figur 2 eine Draufsicht auf das sequentielle Getriebe aus Figur 1 ohne die erfindungsgemäße Vorrichtung; und
- Figur 3 eine schematische Darstellung einer zweiten Ausführungsform einer erfindungsgemäßen Vorrichtung zum Arretieren der Schaltwalze eines sequentiellen Getriebes.

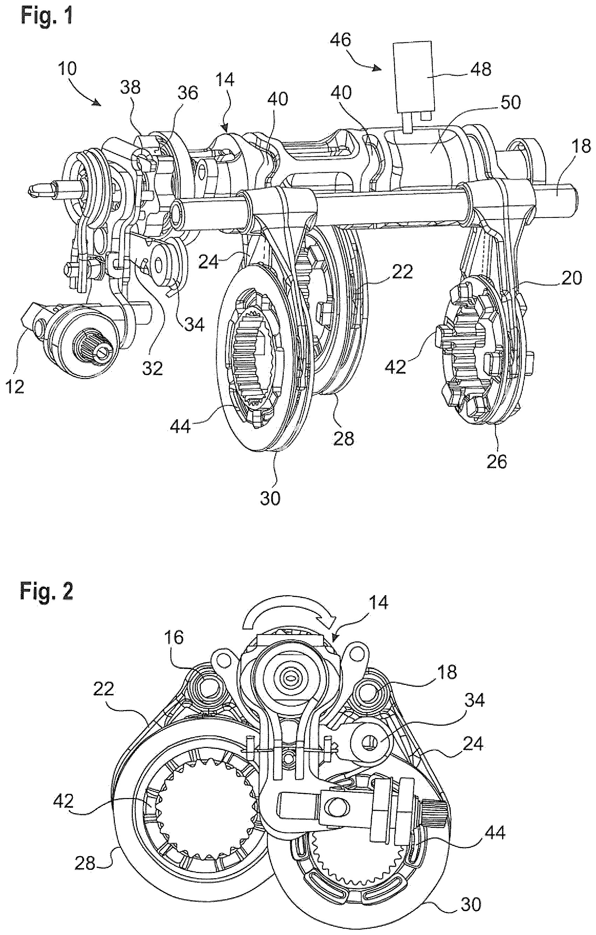

In den Figuren 1 und 2 ist beispielhaft ein sequentielles Getriebe 10 dargestellt, wie es insbesondere bei Motorrädern zum Einsatz kommt. Wesentliche Komponenten des sequentiellen Getriebes 10 sind unter anderem eine Schaltachse 12, eine Schaltwalze 14, eine Getriebeeingangs- und eine Getriebeausgangswelle (Antriebs- bzw. Abtriebswelle, beide nicht gezeigt) sowie auf parallel zu den Getriebewellen verlaufenden Achsen 16, 18 verschiebbare Schaltgabeln 20, 22, 24, die jeweils ein Zahnradpaar 26, 28, 30 halten.

Bei jedem Gangwechsel dreht die Schaltachse 12 in bekannter Weise die Schaltwalze 14 um einen bestimmten Drehwinkel. Bei sechs Gängen hat die Schaltwalze 14 sechs stabile Positionen, die in der Regel gleichmäßig über den Umfang verteilt sind. (Der Leerlauf entspricht in der Regel einer Position zwischen dem ersten und dem zweiten Gang.) Das bedeutet, dass bei jedem Schaltvorgang zwischen zwei Gängen die Schaltwalze 14 um 60° gedreht werden muss - beim Hochschalten in eine erste Drehrichtung, beim Herunterschalten in die entgegengesetzte Richtung. Bei mehr oder weniger Gängen ist die Zahl der stabilen Positionen entsprechend höher bzw. niedriger, und der Drehwinkel entsprechend kleiner bzw. größer.

Ein Rastierhebel 32 ist federnd gelagert und drückt eine Rastrolle 34 gegen den drehfest mit der Schaltwalze 14 verbundenen Raststern (Rastierrad) 36. Wenn ein Zacken 38 des Raststerns 36 überwunden ist, drückt die Rastrolle 34 den Raststern 36 und damit die Schaltwalze 14 in eine stabile Position und fixiert sie.

In die Schaltwalze 14 sind Kanäle 40 eingefräst, in die die Führungsdorne der Schaltgabeln 22, 24, 26 eingreifen. Durch die so gebildete Kulissenführung werden bei jeder Drehung der Schaltwalze 14 eine oder mehrere Schaltgabeln 22, 24, 26 auf den Achsen 16, 18 und damit die zugehörigen Zahnradpaare 26, 28, 30 axial auf den Getriebewellen verschoben. Die seitlichen Klauen 42 eines Zahnradpaares 26, 28, 30 können dadurch in passende Aufnahmen 44 eines benachbarten Zahnradpaares 26, 28, 30 eingesteuert oder ausgesteuert werden. Dieses Verhaken bzw. Lösen von benachbarten Zahnradpaaren 26, 28, 30 entspricht dem eigentlichen Schalten.

In Figur 1 ist symbolisch eine Vorrichtung 46 zum Arretieren der Schaltwalze des Getriebes gemäß einer ersten Ausführungsform dargestellt. Die Vorrichtung 46 verfügt über einen Aktuator 48, der auf Anforderung eine Drehung der Schaltwalze 14 unterbinden kann. Genauer gesagt kann der Aktuator 48 z.B. mittels einer oder mehrerer ausfahrbarer Stifte in außenseitige Ausnehmungen 50 der Schaltwalze 14 eingreifen, sodass bei einem (Weiter-)Drehen der Schaltwalze 14 ein Rand der jeweiligen Ausnehmung 50 am Aktuator 48 anstößt und die Schaltwalze 14 stoppt. Der Aktuator 48 und die Ausnehmungen 50 sind hinsichtlich ihrer Form und Anordnung so aufeinander abgestimmt, dass die Arretiervorrichtung 46 die Schaltwalze 14 zwischen zwei stabilen Positionen festhalten kann. Diese Zwischenpositionen entsprechen Positionen, in denen die Rastrolle 34 des federnd gelagerten Rastierhebels 32 auf einem Zacken 38 des Raststerns 36 liegt, was ohne oder bei inaktiver Arretiervorrichtung 46 einer instabilen Position entspricht. Solange der Aktuator 48 aktiviert ist, verbleibt die Schaltwalze 14 in der Zwischenposition und kann nicht vor und nicht zurück gedreht werden.

Die Arretiervorrichtung 46 hat eine Steuereinrichtung (nicht dargestellt), die anhand bestimmter Eingangssignale entscheidet, wann der Aktuator 48 aktiviert und deaktiviert wird. Die Steuereinrichtung kann Teil einer übergeordneten Steuerung sein, insbesondere einer Steuerung eines Schaltassistenten. Nachfolgend wird die Funktionsweise der Arretiervorrichtung 46 im Zusammenhang mit einem solchen Schaltassistenten am Beispiel eines sequentiellen Getriebes 10 eines Motorrads beschrieben.

Der Fahrer drückt den Fußschalthebel des Motorrads ohne Kupplungsbetätigung nach oben oder unten, wodurch ein Sensor am Fußschalthebel ein Signal erzeugt, das der Steuerung zugeführt wird. Gegebenenfalls wird beim Drücken des Fußschalthebels eine Feder vorgespannt. Der Fußschalthebel dreht über eine Gelenkverbindung die Schaltachse 12, welche wiederum die Schaltwalze 14 dreht, wenn der Antriebsstrang ausreichend entlastet ist. Die Steuerung des Schaltassistenten aktiviert den Aktuator 48 rechtzeitig so, dass sich die Schaltwalze 14 nur bis zur nächsten Zwischenposition drehen kann und dort arretiert wird. Im Falle eines Sechsgang-Getriebes entspricht dies etwa einer 30°-Drehung. Diese limitierte Drehung der Schaltwalze 14 ist einerseits ausreichend, um den zuvor eingelegten Gang zu lösen; andererseits ist die Drehung nicht ausreichend für das Einlegen des nächsten Gangs.

Während sich die Schaltwalze 14 in der Zwischenposition befindet, wird über die Motorsteuerung die Motordrehzahl so angepasst, dass die Drehzahl des An- und Abtriebes übereinstimmen. Dann wird der Aktuator 48 deaktiviert, und die Schaltwalze 14 kann sich weiterdrehen bis zur nächsten stabilen Position, sodass der gewünschte Gang eingelegt wird. Das verspätete Einlegen des Ganges wird durch die Kraft der vorgespannten Feder unterstützt, sodass der Fahrer nicht erneut den Fußschalthebel betätigen muss, um die Weiterdrehung der Schaltwalze 14 zu veranlassen.

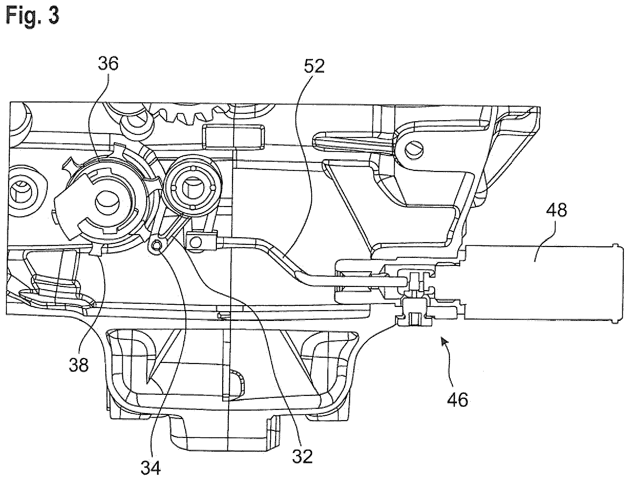

Figur 3 zeigt eine alternative Ausführungsform der Arretiervorrichtung 46. Als Aktuator 48 kommt hier ein reaktionsschneller Magnetantrieb zum Einsatz, der eine Stange 52 auslenken kann. Die Stange 52 ist so an den Rastierhebel 32 des Getriebes 10 gekoppelt, dass bei ausgelenkter Stange 52 die Rastrolle 34 so gegen den Zacken 38 des Raststerns 36 gedrückt wird, dass die drehfest mit dem Raststern 36 verbundene Schaltwalze 14 in der Zwischenposition festgehalten wird. Bei Deaktivierung des Magnetaktors 48 wird die Stange 52 freigegeben bzw. aktiv zurückgezogen, sodass sich die Schaltwalze 14 in die nächste stabile Position weiterdrehen kann.

Wie bereits erwähnt, wurde die Funktion anhand konkreter Beispiele erläutert. Für den Fachmann ist ohne Weiteres ersichtlich, dass die Arretiervorrichtung 46 grundsätzlich bei jeder Art von sequentiellem Getriebe eingesetzt werden kann, prinzipiell sogar ohne Schaltassistenten.

### Bezugszeichenliste

- 10: Getriebe
- 12: Schaltachse
- 14: Schaltwalze
- 16: Achse
- 18: Achse
- 20: Schaltgabel
- 22: Schaltgabel
- 24: Schaltgabel
- 26: Zahnradpaar
- 28: Zahnradpaar
- 30: Zahnradpaar
- 32: Rastierhebel
- 34: Rastrolle
- 36: Raststern
- 38: Zacken
- 40: Kanäle
- 42: Klauen
- 44: Aufnahmen
- 46: Arretiervorrichtung
- 48: Aktuator
- 50: Ausnehmungen
- 52: Stange

## Patentansprüche

1. Vorrichtung zum Arretieren einer Schaltwalze (14) eines sequentiellen Getriebes (10), mit einer Schaltwalze (14), die mehrere stabile Positionen hat, wobei jede stabile Position einem Gang entspricht, und einer Schaltachse (12) zum Drehen der Schaltwalze (14) um einen bestimmten Drehwinkel zur Durchführung eines Gangwechsels, **gekennzeichnet durch** einen zusätzlich zur Schaltachse (12) vorgesehenen Aktuator (48), der bei jedem Gangwechsel mittels einer Steuereinrichtung in einen aktivierten Zustand überführbar ist, in dem der Aktuator (48) direkt oder indirekt so an der Schaltwalze (14) angreift, dass bei einem Drehen der Schaltwalze (14) aus einer stabilen Position, die einem zuvor eingelegten Gang entspricht, die Schaltwalze (14) in einer instabilen Zwischenposition zwischen der stabilen Position und der nächsten stabilen Position, die dem nächsten Gang entspricht, gehalten wird und so ein Weiterdrehen der Schaltwalze (14) verhindert wird.

2. Vorrichtung nach Anspruch 1, **dadurch gekennzeichnet, dass** der Aktuator (48) im aktivierten Zustand in eine außenseitige Ausnehmung (50) der Schaltwalze (14) eingreift.

3. Vorrichtung nach Anspruch 2, **dadurch gekennzeichnet, dass** die Schaltwalze mehrere in Umfangsrichtung verteilte Ausnehmungen (50) aufweist und der Aktuator (48) und die Ausnehmungen (50), insbesondere hinsichtlich ihrer Form und Anordnung, so aufeinander abgestimmt sind, dass der Aktuator (48) im aktivierten Zustand an wenigstens einem Rand einer Ausnehmung (50) angreift, sodass die Schaltwalze (14) in besagter
Zwischenposition festgehalten wird.

4. Vorrichtung nach einem der vorhergehenden Ansprüche, **dadurch gekennzeichnet, dass** der Aktuator (48) wenigstens einen ausfahrbaren Stift aufweist.

5. Vorrichtung nach Anspruch 1, **dadurch gekennzeichnet, dass** der Aktuator (48) im aktivierten Zustand eine Stange (52) auslenkt, die an einen Rastierhebel (32) des Getriebes (10) gekoppelt ist.

6. Vorrichtung nach Anspruch 5, **dadurch gekennzeichnet, dass** die ausgelenkte Stange (52) eine Rastrolle (34) des Rastierhebels (32) gegen einen Zacken (38) eines Raststerns (36) des Getriebes (10) drückt.

7. Vorrichtung nach einem der vorhergehenden Ansprüche, **dadurch gekennzeichnet, dass** der Aktuator (48) einen Magnetantrieb aufweist.

8. Vorrichtung nach einem der vorhergehenden Ansprüche, **dadurch gekennzeichnet, dass** die Steuereinrichtung Teil einer Steuerung eines Schaltassistenten ist.

9. Verfahren zum Arretieren einer Schaltwalze (14) eines sequentiellen Getriebes (10) mithilfe einer Vorrichtung nach einem der vorhergehenden Ansprüche, wobei das Verfahren folgende Schritte umfasst:
- Drehen der Schaltwalze (14) des Getriebes (10) aus einer stabilen Position, die einem zuvor eingelegten Gang entspricht, in eine instabile Zwischenposition vor der nächsten stabilen Position, die dem nächsten Gang entspricht; und
- Arretieren der Schaltwalze (14) in der instabilen Zwischenposition durch Aktivieren des Aktuators (48).

10. Verfahren nach Anspruch 9, **dadurch gekennzeichnet, dass** der Aktuator (48) deaktiviert wird, wenn die Drehzahl der Antriebswelle mit der Drehzahl der Abtriebswelle des Getriebes (10) übereinstimmt.

## Claims

1. Apparatus for locking a gear-shifting drum (14) of a sequential transmission (10), with a gear-shifting drum (14) which has a plurality of stable positions, each stable position corresponding to a gear, and with a shifting shaft (12) for rotating the gear-shifting drum (14) by a defined rotary angle in order to carry out a gear change, **characterized by** an actuator (48) which is provided in addition to the shifting shaft (12) and, in the case of each gear change, can be transferred by means of a control device into an activated state, in which the actuator (48) acts directly or indirectly on the gear-shifting drum (14) in such a way that, in the case of a rotation of the gear-shifting drum (14) out of a stable position which corresponds to a previously engaged gear, the gear-shifting drum (14) is held in an unstable intermediate position between the stable position and the next stable position which corresponds to the next gear, and a further rotation of the gear-shifting drum (14) is thus prevented.

2. Apparatus according to Claim 1, **characterized in that**, in the activated state, the actuator (48) engages into an outer-side recess (50) of the gear-shifting drum (14) .

3. Apparatus according to Claim 2, **characterized in that** the gear-shifting drum has a plurality of recesses (50) which are distributed in the circumferential direction, and the actuator (48) and the recesses (50) are adapted to one another, in particular with regard to their shape and arrangement, in such a way that, in the activated state, the actuator (48) acts on at least one edge of a recess (50), with the result that the gear-shifting drum (14) is held fixedly in the said intermediate position.

4. Apparatus according to one of the preceding claims, **characterized in that** the actuator (48) has at least one extendable pin.

5. Apparatus according to Claim 1, **characterized in that**, in the activated state, the actuator (48) deflects a rod (52) which is coupled to a latching lever (32) of the transmission (10).

6. Apparatus according to Claim 5, **characterized in that** the deflected rod (52) presses a latching roller (34) of the latching lever (32) against a point (38) of a latching star (36) of the transmission (10).

7. Apparatus according to one of the preceding claims, **characterized in that** the actuator (48) has a magnetic drive.

8. Apparatus according to one of the preceding claims, **characterized in that** the control device is part of a controller of a shift assistant.

9. Method for locking a gear-shifting drum (14) of a sequential transmission (10) with the aid of an apparatus according to one of the preceding claims, the method comprising the following steps:
- rotating of the gear-shifting drum (14) of the transmission (10) out of a stable position which corresponds to a previously engaged gear into an unstable intermediate position in front of the next stable position which corresponds to the next gear; and
- locking of the gear-shifting drum (14) in the unstable intermediate position by way of activating of the actuator (48).

10. Method according to Claim 9, **characterized in that** the actuator (48) is deactivated when the rotational speed of the drive shaft corresponds to the rotational speed of the output shaft of the transmission (10).

## Revendications

1. Dispositif de blocage d'un tambour de sélection (14) d'une boîte de vitesses séquentielle (10), comprenant un tambour de sélection (14) qui possède plusieurs positions stables, chaque position stable correspondant à une vitesse, et un axe de sélection (12) destiné à faire tourner le tambour de sélection (14) d'un angle de rotation déterminé pour effectuer un changement de vitesse, **caractérisé par** un actionneur (48) qui est prévu en plus de l'axe de sélection (12) et qui peut être transféré, à chaque changement de vitesse à l'aide d'un dispositif de commande, dans un état activé dans lequel l'actionneur (48) s'engage directement ou indirectement avec le tambour de sélection (14) de manière à maintenir le tambour de sélection (14), lors d'une rotation du tambour de sélection (14) depuis une position stable qui correspond à une vitesse précédemment engagée, dans une position intermédiaire instable située entre la position stable et la position stable suivante qui correspond à la vitesse suivante, et empêcher ainsi le tambour de sélection (14) de poursuivre sa rotation.

2. Dispositif selon la revendication 1, **caractérisé en ce qu'**à l'état activé l'actionneur (48) s'engage dans un évidement extérieur (50) du tambour de sélection (14).

3. Dispositif selon la revendication 2, **caractérisé en ce que** le tambour de sélection comporte une pluralité d'évidements (50) répartis dans la direction circonférentielle et l'actionneur (48) et les évidements (50) sont adaptés entre eux, notamment en ce qui concerne leur forme et leur disposition, de sorte qu'à l'état activé l'actionneur (48) s'engage avec au moins un bord d'un évidement (50) de façon à maintenir le tambour de sélection (14) dans ladite position intermédiaire.

4. Dispositif selon l'une des revendications précédentes, **caractérisé en ce que** l'actionneur (48) comporte au moins une tige extensible.

5. Dispositif selon la revendication 1, **caractérisé en ce qu'**à l'état activé l'actionneur (48) dévie une barre (52) qui est accouplée à un levier d'encliquetage (32) de la boîte de vitesses (10).

6. Dispositif selon la revendication 5, **caractérisé en ce que** la barre déviée (52) presse un galet d'encliquetage (34) du levier d'encliquetage (32) contre une branche (38) d'une étoile d'encliquetage (36) de la boîte de vitesses (10).

7. Dispositif selon l'une des revendications précédentes, **caractérisé en ce que** l'actionneur (48) comporte un entraînement magnétique.

8. Dispositif selon l'une des revendications précédentes, **caractérisé en ce que** le moyen de commande fait partie d'une commande d'un assistant de sélection.

9. Procédé de blocage d'un tambour de sélection (14) d'une boîte de vitesses séquentielle (10) à l'aide d'un dispositif selon l'une des revendications précédentes, le procédé comprenant les étapes suivantes :
- faire tourner le tambour de sélection (14) de la boîte de vitesses (10) depuis une position stable, qui correspond à une vitesse précédemment engagée, à une position intermédiaire instable située avant la position stable suivante qui correspond à la vitesse suivante ; et
- bloquer le tambour de sélection (14) dans la position intermédiaire instable par activation de l'actionneur (48).

10. Procédé selon la revendication 9, **caractérisé en ce que** l'actionneur (48) est désactivé lorsque la vitesse de rotation de l'arbre d'entraînement correspond à la vitesse de rotation de l'arbre de sortie de la boîte de vitesses (10).
